# EUROPÄISCHE PATENTSCHRIFT

(11) **EP 1 507 817 B1**
(45) Veröffentlichungstag und Bekanntmachung des Hinweises auf die Patenterteilung: **19.07.2006**
(21) Anmeldenummer: 03755111.6
(22) Anmeldetag: 22.05.2003
(51) Int. Cl.: C08G 75/14, C08G 59/14

(54) **VERFAHREN ZUR HERSTELLUNG VON EPOXIDIERTEN POLYSULFIDEN**
METHOD FOR PRODUCING EPOXIDISED POLYSULFIDES
PROCEDE DE PRODUCTION DE POLYSULFURES EPOXYDES

(30) Priorität: 24.05.2002 DE 10223283
(43) Veröffentlichungstag der Anmeldung: 23.02.2005
(73) Patentinhaber: Thioplast Chemicals GmbH & Co. Kg, 07973 Greiz (DE)
(72) Erfinder: ZEITLER, Michael, 53347 Alfter (DE); KOTTNER, Nils, 07973 Greiz (DE); BERGFELD, Manfred, 63906 Erlenbach-Mechenhard (DE)
(74) Vertreter: Luderschmidt, Schüler & Partner GbR
(86) Internationale Anmeldenummer: PCT/EP2003/005341
(87) Internationale Veröffentlichungsnummer: WO 2003/099908

(56) Entgegenhaltungen:
- EP-A- 0 347 131
- US-A- 2 731 437
- US-A- 4 931 576

## Beschreibung

Die Erfindung betrifft ein Verfahren zur Herstellung von epoxidierten Polysulfiden. Epoxidierte Polysulfide sowie Verfahren zu deren Herstellung sind bereits seit längerem bekannt. So werden z.B. in der US PS 2 731 437 entsprechende epoxidierte Polysulfide und deren Herstellung beschrieben. Bei dem dort offenbarten Verfahren wird zunächst aus einem organischen Dihalogenid und einem anorganischen Polysulfid ein Thiolendgruppen-haltiges Polysulfid mit sehr hohen Molekulargewichten hergestellt.

So entsteht beispielsweise aus Natriumpolysulfid und Dichlorethylformal (Cl CH₂ CH₂ OCH₂ OCH₂ CH₂ Cl) ein Dithiol der Formel HS (CH₂ CH₂ OCH₂ OCH₂ CH₂ SS)ₙ CH₂ CH₂ OCH₂ OCH₂ CH₂ SH mit n = 25 bis 250 oder höher

Dieses schwer verarbeitbare Substanzgemisch wird danach einer reduktiven S-S-Spaltung unterworfen, um definierte Molekulargewichte zu erreichen, die für die Weiterverarbeitung zum epoxidierten Produkt sinnvoll sind. Beim Einsatz von Dichlorethylformal weisen die SH-terminierten Polysulfide ein mittleres Molekulargewicht von etwa 168 bis 4 000 auf und haben eine Viskosität von etwa 0,5 bis 400 Poise bei Raumtemperatur.

Diese Verbindungen, die auch als aliphatische gesättigte Oxahydrocarbopolythiopolymercaptane bezeichnet werden können, sind die eigentlichen Ausgangsstoffe zur Herstellung der in der US PS 2 731 437 beanspruchten epoxidierten Polysulfide.

Die Synthese der epoximodifizierten Polysulfide findet in zwei Stufen statt, wobei zunächst das polymere Dithiol mit Epichlorhydrin unter Ringöffnung gemäß folgender Reaktionsgleichung reagiert.

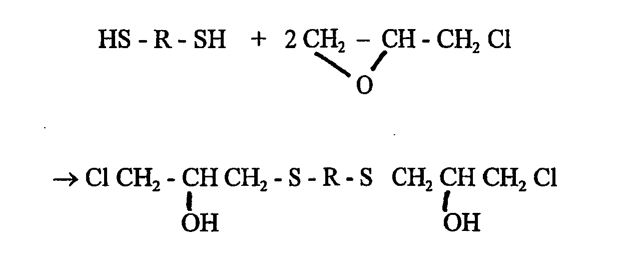

Das zugefügte Alkalihydroxid dient dabei als Katalysator.

In der zweiten Stufe erfolgt schließlich ein erneuter Ringschluß unter Abspaltung von Alkalichlorid, wobei Alkalihydroxid in stöchiometrischer Menge verbraucht wird entsprechend folgender Reaktionsgleichung:

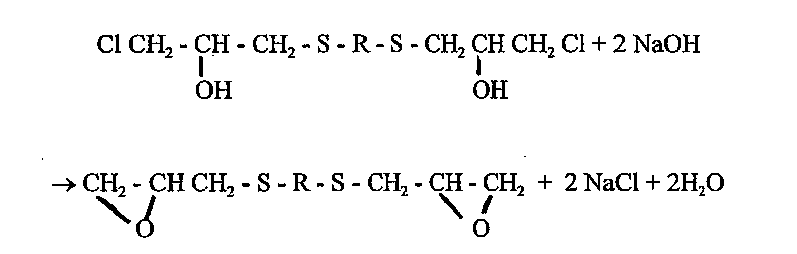

R = -(CH₂ CH₂ - O CH₂ O CH₂ CH₂ SS)ₙ CH₂ CH₂ OCH₂ OCH₂ CH₂ - und n = eine ganze Zahl von 1 bis 50.

Da die Reaktion stark exotherm ist, soll diese gemäß der Lehre der US PS 2 731 437 in Gegenwart eines Verdünnungsmittels wie Alkohol oder Äther durchgeführt werden.

Die Aufarbeitung des Reaktionsprodukts erfolgt dann folgendermaßen: Das organische Lösungsmittel (Verdünnungsmittel), das bei der Reaktion verwendet wurde, wird zunächst zusammen mit eventuell noch vorhandenem Epichlorhydrin abdestilliert. Sodann wird der Rückstand mit einem anderen, mit Wasser nicht mischbaren Lösungsmittel aufgenommen.

Diese organische Lösung wird sodann mit Wasser gewaschen (extrahiert), um noch vorhandenes Alkali (unverbraucht) sowie vor allem die anorganischen Salze zu entfernen.

Aus dieser von anorganischen Bestandteilen befreiten organischen Lösung wird dann das Lösungsmittels destillativ entfernt, und man erhält als Rückstand das gewünschte Endprodukt, ein epoxidiertes Polysulfid, bei Einsatz von Epichlorhydrin einen Glycidylthioether des eingesetzten Polythiols.

In der US PS 5 173 549 und der korrespondierenden EP 0 347 131 B 1 wird ein ähnliches Verfahren beschrieben, bei dem die Umsetzung des mercaptoendgruppenhaltigen Polysulfids mit Epichlorhydrin in Abwesenheit von solchen Lösungsmitteln durchgeführt wird, welche ein einphasiges azeotropes Gemisch mit dem Epichlorhydrin oder mit Epichlorhydrin und Wasser unter den Synthesebedingungen bilden können.

Stattdessen wird Epichlorhydrin im Überschuß (3,5 bis 4 Äquivalente) bezogen auf das Polysulfid eingesetzt und die Reaktion des Mercaptans mit Epichlorhydrin bei Temperaturen um etwa 60°C durch Zutropfen des Alkalihydroxids gestartet. Desgleichen findet auch der Ringschluß zum Epoxid unter Abspaltung von Alkalichlorid bei dieser Temperatur statt.

Während der Reaktion wird Wasser bzw. ein Azeotrop aus Wasser und Epichlorhydrin abdestilliert. Nach Beendigung der Reaktion wird schließlich das restliche Epichlorhydrin abdestilliert und der Rückstand in einem Aufarbeitungslösungsmittel z. B. Toluol aufgenommen.

Diese Lösung muß sodann von den organischen Salzen und eventuell noch vorhandenem Alkalihydroxid abfiltriert werden. Danach folgt ein weiterer Destillationsschritt zum Abtrennen des Aufarbeitungslösungsmittels (Toluol).

Von Nachteil bei den beiden in den US-Patentschriften 2 731437 und 5 173 549 beschriebenen Verfahren ist, dass die Reaktionsbedingung für die in zwei Stufen ablaufende Synthese jeweils für sich genau kontrolliert werden müssen.

So wird gemäß US-PS 2 731437 bei der exothermen ersten Stufe durch Zusatz des Verdünnungsmittels die Heftigkeit der ersten Reaktionsstufe abgemildert, der Zusatz von Alkali, das in der ersten Stufe katalytisch wirkt, muss genau kontrolliert werden und erstreckt sich über einen längeren Zeitraum. Ferner ist erforderlich, die Temperaharführung zu überwachen. Dies kann z. B. durch genaue Kontrolle der Dosierung der Alkaliverbindung geschehen, hinzu kommt aber meist auch ein Kühlen des Reaktionsgemisches, um ein zu hohes Ansteigen der Temperatur zu vermeiden.

Wenn auch das Verfahren gemäß US-PS 5 173 549 ohne Verdünnungsmittel arbeitet, um den Verlauf der exothermen Reaktion zu steuern, so kommt auch dieses Verfahren nicht ohne Kontrolle der Temperatur in der ersten Stufe aus. Es muss gekühlt werden, die Zugabe des Alkali muss genauestens abgestimmt werden. Gemäß Beispiel 4 dieser Patentschrift wird die Lösung des Polysulfids in Epichlorhydrin vor Beginn der Alkalizugabe sogar mit einem Eisbad gekühlt. Gemäß Beispiel 5 wird vor der Zugabe von Alkali auf 55°C erwärmt, dann aber während der Zugabe von Alkali gekühlt.

Der Aufwand bei den Verfahren gemäß der beiden US-Patentschriften bei der ersten Stufe der Synthese ist also sehr hoch. Zur Steuerung dieser Reaktion sind die Anforderungen an die Mess- und Regeltechnik sehr groß. Hinzu kommt bei beiden Verfahren, dass die zweite Stufe unter anderen Verfahrensbedingungen durchgeführt wird; es müssen also Temperaturführung, Alkalizugabe, Druckverhältnisse usw. umgestellt werden, was einen weiteren erheblichen mess- und regeltechnischen Aufwand erforderlich macht. Zudem besteht die Gefahr bei beiden Verfahrensarten, dass bei nicht genauem Einhalten der Verfahrensbedingungen die Reaktion durchgeht, oder mit anderen Worten gesagt es zu einer gefährlichen "Run-away Reaktion" kommt und der Ansatz somit verloren geht oder zumindest zu Produkten mit schlechten Eigenschaften führt.

Obwohl bereits eine ganze Reihe von Verfahren zur Herstellung von epoxidierten Polysulfiden bekannt sind, besteht noch ein großes Bedürfnis nach einem verbessertem Herstellungsverfahren, das insbesondere ein geringeres Gefahrenpotential aufweist, mit geringerem Arbeitsaufwand auskommt und wirtschaftlicher arbeitet und das nicht die anderen vorstehend aufgezeigten Nachteile aufweist.

Aufgabe der Erfindung ist es, ein Verfahren zur Herstellung von epoxidierten Polysulfiden zur Verfügung zu stellen, bei dem Mercaptoendgruppen aufweisende Polysulfide, Epichlorhydrin und Alkali miteinander umgesetzt werden, das sicherer, einfacher und wirtschaftlicher arbeitet, mit weniger Verfahrensschritten als die Methoden gemäß dem Stand der Technik auskommt und das insbesondere nicht den mess- und regeltechnischen Aufwand benötigt, wie es bei den zweistufigen Verfahren gemäß dem Stand der Technik erforderlich ist. Vor allem soll die Erfindung es ermöglichen die Synthese der epoxidierten Polysulfide wie bei einer einstufigen Reaktion durchzuführen, ohne daß dabei ein erhöhtes Sicherheitsrisiko auftritt.

Diese Aufgabe wird gelöst durch ein Verfahren zur Herstellung von Epoxyendgruppen aufweisenden polymeren Polysulfiden durch Umsetzung von Thiolendgruppen aufweisenden Polysulfiden mit Epichlorhydrin in Gegenwart von wässriger Alkalilauge, das dadurch gekennzeichnet ist, dass man Epichlorhydrin vorlegt und das Thiolendgruppen aufweisende Polysulfid zudosiert und danach das Reaktionsgemisch aufarbeitet.

Wässrige Alkalilauge kann dabei entweder zusammen mit dem Epichlorhydrin vorgelegt werden oder bevorzugt in die Vorlage dosiert werden. Im letzteren Falle sollte dafür Sorge getragen werden, daß die Alkalilauge zumindest in katalytischen Mengen in die Vorlage dosiert wird oder in der Vorlage zumindest in katalytischen Mengen vorhanden ist, bevor man die Dosierung des Polysulfids startet.

Es versteht sich von selbst, daß man auch geringe Mengen von Polysulfid zudosieren kann, bevor man die Dosierung der Alkalilauge startet oder daß man mit der Dosierung von Alkalilauge und Polysulfid gleichzeitig beginnt, ohne wesentliche Nachteile in Kauf zu nehmen.

Man kann aber auch nur katalytische Mengen an wässriger Alkalilauge in die Vorlage mit dem Epichlorhydrin vermischen und die überwiegende Menge Alkalilauge sodann im Laufe der Umsetzung zudosieren. Selbstverständlich kann in den Reaktor die wässrige Alkalilauge auch in solchen Mengen vorgelegt werden, die zwischen der katalytischen und der für die Umsetzung benötigten Gesamtmenge an Alkalilauge liegen.

Es ist vorteilhaft als Alkalilauge konzentrierte Alkalilauge, insbesondere 30 bis 60 Gew.-%ige Alkalilauge einzusetzen. Für das erfindungsgemäße Verfahren ist wässrige Natronlauge besonders geeignet.

Vorzugsweise wird die Alkalilauge in stöchiometrischen Mengen bezogen auf das Polysulfid verwendet. Sie kann aber auch im Überschuss eingesetzt werden, vorzugsweise bis zu 20 % über der stöchiometrischen Menge.

Bevorzugt wird die Umsetzung unter Rühren durchgeführt.

Es ist vorteilhaft, die Umsetzung in Gegenwart eines Phasentransferkatalysators durchzuführen. Als Phasentransferkatalysatoren werden tertiäre Ammoniumsalze bevorzugt, insbesondere Methyltrioctylammoniumchlorid.

Eine vorteilhafte Ausführungsform des erfindungsgemäßen Verfahrens besteht darin, daß man zur Aufarbeitung des Reaktionsgemisches zunächst das Wasser weitgehend entfernt, die vorhandene organische Phase von den abgeschiedenen Salzen und ggf. nach vorhandenem Alkalihydroxid trennt und aus der abgetrennten organischen Phase das Epichlorhydrin destillativ entfernt, wobei als Rückstand das Epoxyendgruppen aufweisende polymere Polysulfid anfällt, welches ggf. noch destillativ gereinigt wird.

Zur Aufarbeitung des Reaktionsgemisches kann man nach dem Entfernen des im Reaktionsgemisch noch vorhandenen restlichen Wassers das ausgefallenem Alkalichlorid und ggf. noch vorhandenes Alkalihydroxid in einem geschlossenen Filtertrockner (Rosenmundfilter) abfiltrieren und anschließend das am Alkalichlorid und Alkalihydroxid noch anhaftende Epichlorhydrin mittels eines erwärmten inerten Gases heraustrocknen.

Man kann aber auch noch nach dem Entfernen des restlichen Wassers die im wesentlichen wasserfreie organische Phase durch Dekantieren bzw. Abhebern von den abgeschiedenen Salzen und ggf. noch vorhandenem Alkalihydroxid abtrennen.

Im Gegensatz zu Verfahren gemäß dem Stand der Technik, bei dem die erste Stufe unter Kühlung bei Temperaturen von etwa 20 bis max. 50° C und die zweite Stufe durch Erwärmung bei mindestens 40° C bis 90° C durchgeführt werden muß, kann die Reaktion beim erfindungsgemäßen Verfahren über die gesamte Reaktionsdauer bei der gleichen Temperatur durchgeführt werden. Bevorzugte Temperaturen liegen im Bereich von 35° bis 50° C, wobei 40° C besonders bevorzugt ist.

Andere Temperaturen sind auch möglich, aus ökonomischen Gründen jedoch nicht so vorteilhaft.

Die Reinigung des Epoxidendgruppen aufweisenden polymeren Polysulfids erfolgt vorteilhaft mittels Dünnschichtdestillation. Es ist vorteilhaft die Dünnschichtdestillation unter Zusatz eines mit Epichlorhydrin ein Azeotrop bildendes Mittel, insbesondere n- oder iso-Propanol durchzuführen.

Eine weitere Ausführungsform des erfindungsgemäßen Verfahrens kann auch darin bestehen, daß man aus dem Reaktionsgemisch Wasser und Epichlorhydrin und ggf. sonstige vorhandene flüchtige Bestandteile abdestilliert, das im Rückstand befindliche Epoxydendgruppen aufweisende Polysulfid in einem Lösungsmittel (work-up solvent) aufnimmt, aus der erhaltenen Lösung das Epoxydendgruppen aufweisende Polysulfid abtrennt und ggf. destillativ reinigt.

Die work-up Lösung wird vorteilhaft mit Wasser extrahiert, um anorganische Salze und Alkalihydroxid zu entfernen. Als work-up Lösungsmittel wird ein Lösungsmittel verwendet, in dem anorganische Salze und Alkalihydroxid weitgehend unlöslich sind.

Die Durchführung des erfindungsgemäßen Verfahrens kann z. B. wie folgt vorgenommen werden:

Zunächst wird eine Vorlage von Epichlorhydrin und gegebenenfalls wässriger Alkalilauge hergestellt. Das kann beispielsweise auf die Weise geschehen, das zunächst das Epichlorhydrin , sodann die gesamte Alkalilauge in ein Gefäß gegeben werden und die beiden Komponenten miteinander vermischt werden.

Die Menge an eingesetztem Epichlorhydrin hängt ab von der Menge an Thiolendgruppen aufweisendem Polysulfid, das zur Umsetzung gebracht werden soll. Im allgemeinen ist es zweckmäßig einen zwei- bis zwölffachen, vorzugsweise drei- bis zehnfachen, insbesondere vier- bis achtfachen molekularen Überschuss an Epichlorhydrin einzusetzen.

Die Vorlage kann weitere Zusätze enthalten, insbesondere einen Phasentranspherkatalysator.

Es ist auch möglich der Vorlage andere Zusätze beizumischen wie z. B. Alkohol oder Äther. Bevorzugt enthält die Vorlage jedoch nur Epichlorhydrin und ggf. Alkalihydroxid in Form von wässrige Alkalilauge sowie ggf. den Phasentranspherkatalysator.

Die Abdestillation von Wasser als azeotropes Gemisch zusammen mit Epichlorhydrin startet sogleich bei Beginn des Zudosierens des Polysulfids.

Beim Zudosieren des Polysulfids wird Reaktionswärme frei, die zum einen dem System in Form von Verdampfungswärme beim Abdestillieren des Wasser /Epichlorhydrin-Azeotrops wieder entzogen wird und zum anderen für die Ringschlußreaktion gebraucht wird.

Zur Vervollständigung der Reaktion kann es erforderlich sein, dem System von außen Wärme zuzuführen.

Nach Beendigung der Umsetzung und nachdem das gesamte Wasser abdestilliert worden ist, (d. h. das Wasser, welches aus der vorgelegten wässrigen Natronlauge stammt und das bei der Reaktion frei werdende Wasser) liegt ein Gemisch vor, welches Epichlorhydrin, das Umsetzungsprodukt sowie anorganische Salze und gegebenenfalls Alkali enthält.

Die Aufarbeitung dieses Gemischs kann z. B. nach einem Verfahren geschehen, wie es in der US-PS 2 731 437 beschrieben wird. Das heißt, es wird zunächst das Epichlorhydrin abdestilliert, sodann wird der Rückstand mit einem anderen mit Wasser nicht mischbaren Lösungsmittel aufgenommen.

Als Lösungsmittel, das hier die Funktion eines Aufarbeitungsmittels (work-up solvent) hat, wird bevorzugt Toluol oder Methylisobutylketon verwendet. Weitere geeignete Lösungsmittel sind Cyclohexanon, Butylacetat, Benzol, Xylol, Kohlenstofftetrachlorid, Ethylendichlorid, Chlorbenzol, Dibutylether und dergleichen.

Diese organische Lösung wird sodann mit Wasser gewaschen, um noch vorhandenes Alkali (unverbrauchtes) sowie anorganische Salze zu entfernen. Aus dieser von anorganischen Bestandteilen befreiten organischen Lösung wird dann das Lösungsmittel destillativ entfernt, und man erhält als Rückstand das gewünschte Endprodukt, ein epoxydiertes Polysulfid.

Bevorzugt wird jedoch die Trennung von den anorganischen Salzen und ggf. noch vorhandenem restlichen Alkali direkt vorgenommen, entweder mittels Filtration oder durch Dekantieren oder Abhebern.

Dazu wird das Reaktionsgemisch, welches im wesentlichen noch aus Epichlorhydrin, Alkali und anorganischen Salzen und dem epoxidierten Polysulfid besteht, abgekühlt, vorzugsweise auf Zimmertemperatur und eine Zeit lang stehen gelassen. Dabei setzen sich die anorganischen Bestandteile in weitgehend kristalliner Form am Boden und am Rand des Gefäßes ab. Die organische Phase kann sodann durch Dekantieren oder Abhebern von den anorganischen Bestandteilen getrennt werden.

Die organische Phase wird sodann von Epichlorhydrin durch Destillation befreit, als Rückstand fällt das gewünschte Endprodukt, das epoxidierte Polysulfid an, das gegebenenfalls noch gereinigt werden kann, vorzugsweise mittels Dünnschichtdestillation.

Es war besonders überraschend, dass es mittels der Erfindung möglich war eine ganze Reihe von Verfahrensschritten einzusparen, die gemäß dem Stand der Technik erforderlich waren. So wird die Reaktion quasi wie eine einstufige Reaktion durchgeführt, d. h. es muss nicht mehr wie bisher ein Unterschied zwischen der ersten und der zweiten Stufe gemacht werden, so dass unterschiedliche Temperaturführungen und aufwendiges Erwärmen bzw. Kühlen entfallen. Ferner kann das umzusetzende Mercaptanendgruppen aufweisende Polysulfid konstant zudosiert werden. Es entfällt die aufwendige Zudosierung der Alkalilauge, die gemäß Stand der Technik bei der ersten Stufe vorsichtig und in geringen Mengen durchgeführt werden musste. Sodann braucht nicht eine Abänderung der Dosierung für die zweite Stufe erfolgen.

Dies bedeutet einen enormen verfahrenstechnischen Fortschritt, insbesondere eine Vereinfachung und eine beachtliche Energieeinsparung, welche mit der Dosierung des Polysulfids stattfindet; die Ausbeute bezogen auf Epichlorhydrin und die Reinheit des Endproduktes werden dabei nicht beeinträchtigt.

Es ist vor allem völlig überraschend, daß die Weiterreaktion der Epoxiendgruppen mit Überschuß an Alkalihydroxid unter den gewählten Bedingungen u. a. auch bei erhöhten Temperaturen praktisch nicht stattfindet. Die Qualität des erhaltenen Produkts ist nämlich hervorragend.

Das Endprodukt zeichnet sich durch eine hohe Reinheit aus. Da die Qualität des erhaltenen Produktes hervorragend ist, ist es auch sehr gut geeignet für die Weiterverarbeitung z. B. zur Herstellung von Klebstoffen, Überzügen, Dichtstoffen und dergleichen.

Die Erfindung wird durch folgende Beispiele näher erläutert.

### Beispiel 1

In einem 500 l Doppelmantel-Glasreaktor (Firma Schott, Mainz), ausgerüstet mit Ankerrührer, Destillationsaufsatz, Phasenseparator, Bodenablaßventil und Zudosiervorrichtung werden 150 kg Epichlorhydrin vorgelegt, der Glasreaktor wird mit Brunnenwasser gekühlt, unter Rührung werden 80 kg wässrige 25 %-ige Natronlauge sorgfältig zugemischt. Anschließend wird der Reaktor auf 40° C beheizt, ein Vakuum von 50 mbar angelegt und unter kräftigem Rühren 220 kg eines auf 40° C erwärmten polymeren Polysulfids (Thioplast G4, Mw ca. 1100) mittels einer Kolbenpumpe kontinuierlich zudosiert. Dabei destilliert über die gesamte Dosierdauer ein azeotropes Gemisch von Wasser/Epichlorhydrin über den Destillationsaufsatz ab und wird im Phasenseparator in eine leichtere Wasserphase und eine schwerere Epichlorhydrinphase getrennt. Letztere wird dabei kontinuierlich in den Reaktor zurückgeführt. Nach 90 Minuten ist die gesamte Menge an Polysulfid zudosiert und die Umsetzung praktisch beendet. Es wird noch 30 Minuten zur Vervollständigung der Reaktion unter Anpassung des Vakuums auf 70° C erhitzt, wobei die Rückführung der Epichlorhydrinphase aus dem Phasenseparator beendet wird und das restliche Wasser destillativ entfernt wird, was daran zu erkennen ist, daß am Ende die Temperatur im Destillationsaufsatz auf den Siedepunkt von reinem Epichlorhydrin ansteigt.

Zur Vervollständigung der Auskristallisation des Kochsalzes und der überschüssigen NaOH wird der Reaktorinhalt auf 20° C abgekühlt. Das Rührwerk wird nun abgeschaltet, und nach 12 Stunden wird die Lösung durch Dekantieren von den ausgeschiedenen Kristallen entfernt. Die das Reaktionsprodukt enthaltene Lösung wird sodann destillativ bei einem Druck von 25 mbar und einem Temperaturregime von 30 - 80°C innerhalb von 2 Stunden von Epichlorhydrin weitgehend befreit.

Zur Entfernung der noch vorhandenen Spuren an Epichlorhydrin wird das leicht viskose Polymer über einen zweistufigen Dünnschichtverdampfer der Fa. Fischer, Meckenheim, mit einer Gesamtoberfläche von 0,45 m² bei einem Druck von 0,1 - 2 mbar gereinigt. Die Ausbeute bezogen auf eingesetztes Thioplast ist 98,5 %; das Produkt fällt als klare, hellgelbe niedrigviskose (2 Pa.s) Flüssigkeit mit einem Restgehalt von weniger als 100 ppm Epichlorhydrin an.

### Beispiel 2

In der gleichen Versuchsanordnung wie in Beispiel 1 werden 165 kg Epichlorhydrin mit 2,5 kg 50 Gew.-% iger Natronlauge sowie 250 g Aliquat 336 unter Rühren, wobei die Temperatur auf Raumtemperatur gehalten wird, sorgfältig vermischt. Danach wird die Vorlage auf 55° C erwärmt und insgesamt 210 kg Thioplast G4 sowie 42,5 kg 50 Gew.- %igen Natronlauge im Verlaufe von 120 Minuten zudosiert. Dabei wird das angelegt Vakuum so gewählt, daß während der gesamten Dosierdauer kontinuierlich ein azeotropes Gemisch von Wasser und Epichlorhydrin über den Destillationsaufsatz abgenommen und die schwerere Epichlorhydrinphase nach der Phasensepartion kontinuierlich in den Reaktor zurückgeschleust wird. Während der Zudosierung des Thioplast G4 und der Natronlauge ist nur eine geringe Wärmezufuhr nötig, da die zur Verdampfung notwendige Energie weitgehend durch die beim Zudosieren der Thioplast G4 Lösung frei werdende Reaktionswärme aufgebracht wird. Der Druck wird dabei zwischen 50 und 200 mbar gehalten.

Nach beendeter Reaktion, die sich durch Ansteigen der Temperatur im Destillationsaufsatz auf die Siedetemperatur von reinem Epichlorhydrin anzeigt, wird das gesamte Epichlorhydrin durch Anlegen eines vollen Vakuums und einer Maximaltemperatur von 65° C völlig entfernt. Der zum Trocknen eingedampfte Rückstand wird dann im Verlauf von ca. 30 Minuten mit 115 l Toluol aufgerührt und nach dem Absetzen über ein Tauchrohr, das um feine Salzpartikel zurückzuhalten mit einer Metallsinterplatte versehen ist, abdekantiert.
Die daraus resultierende klare Toluollösung wird in einen separaten 5001 Reaktor übergeführt und von Toluol bei 40 mbar und einer Endtemperatur von 100° C vollständig befreit.

Der leicht viskose Rückstand wird über einen zweistufigen Dünnschichtverdampfer der Firma Fischer, Meckenheim mit einer Gesamtoberfläche von 0,45 m² bei einem Druck von 0,1 bis 2 mbar gereinigt. Die Ausbeute bezogen auf ein gesetztes Thioplast ist 98,5 %; das Produkt fällt als klare hellgelbe niedrigviskose Flüssigkeit (2 Pa.s) an.

### Beispiel 3

In der gleichen Versuchsanordnung wie Beispiel 1 werden 111 kg Epichlorhydrin (1.2 Kmol) mit 23,6 kg einer 50 %igen wässrigen Natronlauge und 22,8 kg Ethanol unter Kühlung und intensivem Rühren sorgfältig vermischt. Anschließend wird das Gemisch auf 50° C erwärmt und im Verlauf von 120 Minuten 120 kg eines flüssiges Thioplast (mittleres Molekulargewicht 600) der Firma AKCROS Chemicals Greiz zudosiert analog Beispiel 1, jedoch ohne Anlegen von Vakuum. Nachdem die gesamte Menge an Thioplast zudosiert ist, wird noch ca. 30 Min. bei 65° C nachreagiert und danach der gesamte Reaktorinhalt unter Vakuum bei 20 mbar und max. 65° C unter Rühren zur Trockene eingeengt.

Der Reaktorinhalt wird anschließend mit 350 l Toluol unter Rühren versetzt und das entstandene Gemisch in einer pulsierenden Siebbodenkolonne kontinuierlich mit Wasser extrahiert, um die anorganischen Bestandteile zu entfernen. Die extrahierte Toluollösung wird dann analog Beispiel 2 aufgearbeitet.

Dabei fallen insgesamt 185 kg eines viskosen, leicht gelben Produktes als Rückstand an, welches direkt zur Herstellung von Dichtstoffen etc. verwendet werden kann.

## Patentansprüche

1. Verfahren zur Herstellung von Epoxyendgruppen aufweisenden polymeren Polysulfiden durch Umsetzung von Thiolendgruppen aufweisenden Polysulfiden mit Epichlorhydrin in Gegenwart von wässriger Alkalilauge, **dadurch gekennzeichnet, dass** man Epichlorhydrin vorlegt und das Thiolendgruppen aufweisende Polysulfid zudosiert und danach das Reaktionsgemisch aufarbeitet.

2. Verfahren nach Anspruch 1, **dadurch gekennzeichnet, dass** man auch wässrige Alkalilauge in die Vorlage dosiert.

3. Verfahren nach Anspruch 1 oder 2, **dadurch gekennzeichnet, dass** man der Vorlage vor Beginn der Polysulfiddosierung katalytische Mengen an Alkalilauge zugibt.

4. Verfahren nach Anspruch 1, **dadurch gekennzeichnet, dass** man die gesamte Menge Alkalilauge vor Beginn der Polysulfiddosierung vorlegt.

5. Verfahren nach mindestens einem der Ansprüche 1 bis 4, **dadurch gekennzeichnet, dass** man konzentrierte Alkalilauge, vorzugsweise 30 bis 60 Gew.-%ige Alkalilauge verwendet.

6. Verfahren nach mindestens einem der Ansprüche 1 bis 5, **dadurch gekennzeichnet, dass** man als wässrige Alkalilauge Natronlauge verwendet.

7. Verfahren nach mindestens einem der Ansprüche 1 bis 5, **dadurch gekennzeichnet, dass** man die Alkalilauge im stöchiometrischen Überschuss, vorzugsweise bis zu 20 % über der stöchiometrischen Menge verwendet.

8. Verfahren nach mindestens einem der Ansprüche 1 bis 6, **dadurch gekennzeichnet, dass** man die Umsetzung in Gegenwart eines Phasentransferkatalysators, vorzugsweise eines tertiarem Ammoniumsalzes durchführt.

9. Verfahren nach Anspruch 8 , **dadurch gekennzeichnet, dass** man als Katalysator Methyltrioctylammoniumchlorid verwendet.

10. Verfahren nach mindestens einem der Ansprüche 1 bis 9, **dadurch gekennzeichnet, dass** man die Umsetzung unter Rühren durchführt.

11. Verfahren nach mindestens einem der Ansprüche 1 bis 10, **dadurch gekennzeichnet, dass** man zur Aufarbeitung des Reaktionsgemisches zunächst das Wasser entfernt und danach die vorhandene organische Phase von den abgeschiedenen Salzen und ggf. noch vorhandenem Alkalihydroxid trennt und aus der abgetrennten organischen Phase das Epichlorhydrin destillativ entfernt, wobei als Rückstand das Epoxyendgruppen aufweisende polymere Polysulfid anfällt, welches gegebenenfalls noch destillativ gereinigt wird.

12. Verfahren nach Anspruch 11, **dadurch gekennzeichnet, dass** man zur Aufarbeitung des Reaktionsgemisches nach dem Entfernen des im Reaktionsgemisch noch vorhandenen restlichen Wassers das Reaktionsgemisch von ausgefallenem Alkalichlorid und ggf. noch vorhandenem Alkalihydroxid in einem geschlossenen Filter (Rosenmundfilter) abfiltriert und anschließend das am Alkalichlorid und Alkalihydroxid noch anhaftende Epichlorhydrin mittels eines erwärmten inerten Gases heraustrocknet.

13. Verfahren nach Anspruch 11, **dadurch gekennzeichnet, dass** man nach dem Entfernen des restlichen Wassers die im wesentlichen wasserfreie organische Phase durch Dekantieren bzw. Abhebern von den abgeschiedenen Salzen und ggf. noch vorhandenem Alkalihydroxid trennt.

14. Verfahren nach mindestens einem der Ansprüche 1 bis 13, **dadurch gekennzeichnet, dass** man das Epoxyendgruppen aufweisende polymere Polysulfid mittels Dünnschichtdestillation reinigt.

15. Verfahren nach Anspruch 14, **dadurch gekennzeichnet, dass** man die Dünnschichtdestillation unter Zusatz eines mit Epichlorhydrin ein Azeotrop bildendes Mittel, insbesondere n- oder iso-Propanol durchführt.

16. Verfahren nach mindestens einem der Ansprüche 1 bis 10, **dadurch gekennzeichnet, dass** man aus dem Reaktionsgemisch Wasser, Epichlorhydrin und ggf. sonstige vorhandene flüchtige Bestandteile abdestilliert, das im Rückstand befindliche Epoxyendgruppen aufweisende Polysulfid in einem Lösungsmittel (work-up solvent) aufnimmt, und aus der erhaltenen Lösung das Epoxyendgruppen aufweisende Polysulfid abtrennt und ggf. destillativ reinigt.

17. Verfahren nach Anspruch 16, **dadurch gekennzeichnet, daß** man die nach dem Aufnehmen erhaltene work-up Lösung mit Wasser extrahiert, um anorganische Salze und Alkalihydroxid zu entfernen.

18. Verfahren nach Anspruch 16, **dadurch gekennzeichnet, daß** man ein work-up-solvent verwendet, in dem anorganische Salze und Alkalihydroxyd praktisch völlig unlöslich sind.

19. Verfahren nach Anspruch 16, **dadurch gekennzeichnet, dass** man das im work-up-solvent gelöste Epoxyendgruppen aufweisende Polysulfid durch Filtration von den anorganischen Salzen trennt.

## Claims

1. Method of producing polymeric polysulphides having epoxy end groups by converting polysulphides having thiol end groups with epichlorohydrin in the presence of aqueous alkaline lye, **characterised in that** a supply of epichlorohydrin is provided and the polysulphide having thiol end groups is metered in, and the reaction mixture is then worked up.

2. Method according to claim 1, **characterised in that** aqueous alkaline lye is also metered into the supply.

3. Method according to claim 1 or 2, **characterised in that** catalytic amounts of alkaline lye are added to the supply before the metering-in of the polysulphide begins.

4. Method according to claim 1, **characterised in that** the entire amount of alkaline lye is supplied before the metering-in of the polysulphide begins.

5. Method according to at least one of claims 1 to 4, **characterised in that** concentrated alkaline lye, preferably 30 to 60% alkaline lye, is used.

6. Method according to at least one of claims 1 to 5, **characterised in that** soda lye is used as the aqueous alkaline lye.

7. Method according to at least one of claims 1 to 5, **characterised in that** the alkaline lye is used in a stoichiometric excess, preferably one of up to 20% more than the stoichiometric amount.

8. Method according to at least one of claims 1 to 6, **characterised in that** the conversion is performed in the presence of a phase-transfer catalyst, preferably a tertiary ammonium salt.

9. Method according to claim 8, **characterised in that** methyl trioctyl ammonium chloride is used as the catalyst.

10. Method according to at least one of claims 1 to 9, **characterised in that** the conversion is performed while stirring.

11. Method according to at least one of claims 1 to 10, **characterised in that**, to work up the reaction mixture, the water is first removed and the organic phase which is present is then removed from the salts which have separated out and any alkali hydroxide which may possibly still be present and the epichlorohydrin is removed by distillation from the organic phase which has been separated off, the polymeric polysulphide having epoxy end groups, which is also purified by distillation if required, being produced as a residue.

12. Method according to claim 11, **characterised in that**, to work up the reaction mixture, the reaction mixture is, after the remaining water which is still present in the reaction mixture has been removed, filtered off, in an enclosed filter (Rosenmund filter), from any alkali chloride which has precipitated out and from any alkali hydroxide which may possibly be present and the epichlorohydrin which is still clinging to the alkali chloride and alkali hydroxide is dried off by means of a heated inert gas.

13. Method according to claim 11, **characterised in that**, after the removal of the remaining water, the substantially water-free organic phase is separated from the salts which have separated out and from any alkali hydroxide which may possibly still be present by decanting or siphoning-off.

14. Method according to at least one of claims 1 to 13, **characterised in that** the polymeric polysulphide having epoxy end groups is purified by thin-film distillation.

15. Method according to claim 14, **characterised in that** the thin-film distillation is performed with the addition of a medium which forms an azeotrope with epichlorohydrin, in particular n-propanol or isopropanol.

16. Method according to at least one of claims 1 to 10, **characterised in that** water, epichlorohydrin and other volatile constituents which may possibly be present are distilled off from the reaction mixture, the polysulphide having epoxy end groups which is present in the residue is dissolved in a solvent (work-up solvent), and the polysulphide having epoxy end groups is separated off from the solution obtained and is purified by distillation if required.

17. Method according to claim 16, **characterised in that** the work-up solution obtained after the dissolution is extracted with water to remove inorganic salts and alkali hydroxide.

18. Method according to claim 16, **characterised in that** the work-up solvent used is one in which inorganic salts and alkali hydroxide are virtually totally insoluble.

19. Method according to claim 16, **characterised in that** the polysulphide having epoxy end groups which is dissolved in the work-up solvent is separated from the inorganic salts by filtration.

## Revendications

1. Procédé pour préparer des polysulfures polymères comportant des groupes terminaux époxy par conversion de polysulfures comportant des groupes terminaux thiol à l'aide d'épichlorhydrine en présence de base alcaline aqueuse, **caractérisé en ce qu'**on prend de l'épichlorhydrine et on y ajoute le polysulfure comportant des groupes terminaux thiol et ensuite on obtient le mélange réactionnel.

2. Procédé selon la revendication 1, **caractérisé en ce qu'**on ajoute aussi une base alcaline aqueuse dans la préparation.

3. Procédé selon la revendication 1 ou 2, **caractérisé en ce qu'**on ajoute des quantités catalytiques de base alcaline à la préparation avant de commencer l'ajout de polysulfure.

4. Procédé selon la revendication 1, **caractérisé en ce qu'**on place toute la quantité de base alcaline avant de commencer l'ajout de polysulfure.

5. Procédé selon l'une au moins une des revendications 1 à 4, **caractérisé en ce qu'**on utilise une base alcaline concentrée, de préférence une base alcaline entre 30 et 60 % en poids.

6. Procédé selon l'une au moins des revendications 1 à 5, **caractérisé en ce que** la base alcaline aqueuse utilisée est de la soude caustique.

7. Procédé selon l'une au moins des revendications 1 à 5, **caractérisé en ce qu'**on utilise la base alcaline en excès stoechiométrique, de préférence jusqu'à 20 % au-dessus de la quantité stoechiométrique.

8. Procédé selon l'une au moins des revendications 1 à 6, **caractérisé en ce que** la conversion est effectuée en présence d'un catalyseur de transfert de phase, de préférence un sel d'ammonium tertiaire.

9. Procédé selon la revendication 8, **caractérisé en ce que** le catalyseur utilisé est le chlorure de méthyltrioctylammonium.

10. Procédé selon l'une au moins des revendications 1 à 9, **caractérisé en ce qu'**on réalise la conversion sous agitation.

11. Procédé selon l'une au moins des revendications 1 à 10, **caractérisé en ce que** pour finir de traiter le mélange réactionnel on élimine d'abord l'eau et ensuite on sépare la phase organique disponible des sels déposés et le cas échéant de l'hydroxyde alcalin encore présent et on élimine par distillation l'épichlorhydrine de la phase organique séparée, le résidu obtenu étant le polysulfure polymère qui présente des groupes terminaux époxy et qui est le cas échéant encore purifié par distillation.

12. Procédé selon la revendication 11, **caractérisé en ce que** pour finir de traiter le mélange réactionnel après élimination de l'eau résiduelle encore présente dans le mélange réactionnel, le chlorure alcalin déposé et le cas échéant l'hydroxyde alcalin encore présent sont séparés du mélange réactionnel par filtration dans un filtre fermé (filtre de Rosenmund) et ensuite l'épichlorhydrine qui adhère encore au chlorure alcalin et à l'hydroxyde alcalin est séchée à l'aide d'un gaz inerte chauffé.

13. Procédé selon la revendication 11, **caractérisé en ce qu'**après élimination de l'eau résiduelle, la phase organique pratiquement exempte d'eau est séparée des sels déposés et le cas échéant de l'hydroxyde alcalin encore présent par décantation ou par siphonnage.

14. Procédé selon l'une au moins des revendications 1 à 13, **caractérisé en ce qu'**on purifie par distillation en couche mince le polysulfure polymère comportant des groupes terminaux époxy.

15. Procédé selon la revendication 14, **caractérisé en ce que** la distillation en couche mince est réalisée en ajoutant un milieu qui forme un azéotrope avec l'épichlorhydrine, en particulier le n-propanol ou l'isopropanol.

16. Procédé selon l'une au moins des revendications 1 à 10, **caractérisé en ce qu'**on élimine du mélange réactionnel par distillation l'eau, l'épichlorhydrine et le cas échéant d'autres composants volatils présents, on absorbe dans un solvant (work-up solvent) le polysulfure comportant des groupes terminaux époxy qui se trouve dans le résidu et on sépare de la solution obtenue le polysulfure comportant des groupes terminaux époxy et on le purifie le cas échéant par distillation.

17. Procédé selon la revendication 16, **caractérisé en ce qu'**on extrait à l'eau la solution de solvant obtenue après l'absorption afin d'éliminer les sels inorganiques et l'hydroxyde alcalin.

18. Procédé selon la revendication 16, **caractérisé en ce qu'**on utilise un solvant (work-up solvent) dans lequel les sels inorganiques et l'hydroxyde alcalin sont presque totalement insolubles.

19. Procédé selon la revendication 16, **caractérisé en ce que** le polysulfure comportant des groupes terminaux époxy dissous dans le solvant (work-up solvent) est séparé des sels inorganiques par filtration.
